# EUROPEAN PATENT APPLICATION

(11) **EP 3 951 118 A1**
(43) Date of publication of application: **09.02.2022**
(21) Application number: 20783267.6
(22) Date of filing: 23.03.2020
(51) Int. Cl.: E04H 1/12, E04B 1/343, F03D 13/40, E04D 13/18, H02S 20/24

(54) **MOBILE SHOP PROVIDED WITH NATURAL ENERGY POWER GENERATION DEVICE**

(30) Priority: 05.04.2019 JP 2019072825
(71) Applicant: NTN Corporation, Osaka-shi, Osaka 550-0003 (JP)
(72) Inventor: AKAGAWA, Mitsuru, Kuwana-shi, Mie 511-0867 (JP)
(74) Representative: Cabinet Netter
(86) International application number: PCT/JP2020/012629
(87) International publication number: WO 2020/203394

(57) **Abstract**

Provided is a mobile shop (1) including: a transportable shop body (3) including a top wall (11), a bottom wall (13), and a surrounding wall (15); and at least one power generation device attached to the shop body (3), the at least one power generation device being one or more of a wind power generation device (5), a solar power generation device (7), and a hydraulic power generation device. The mobile shop (1) may include all of the wind power generation device (5), the solar power generation device (7), and the hydraulic power generation device. The shop body (3) may be a freight container.

## Description

### CROSS REFERENCE TO THE RELATED APPLICATION

This application is based on and claims Convention priority to Japanese patent application No. 2019-072825, filed April 5, 2019, the entire disclosure of which is herein incorporated by reference as a part of this application.

### BACKGROUND OF THE INVENTION

### (Field of the Invention)

The present invention relates to a mobile shop (or a mobile store) with a power generation device which uses natural energy.

### (Description of Related Art)

A conventionally known mobile shop is a modified vehicle having a loading bed altered to have a facility and a function as a shop (for example, see Patent Document 1). It has been proposed that in a case where an electric apparatus is mounted on a loading bed of a vehicle, a vehicular storage battery is used as a power source for the electric apparatus (for example, see Patent Document 2). Therefore, also in a case where a shop is set up on a loading bed of a vehicle, a vehicular storage battery may be employed for an electric apparatus used in the shop.

### [Related Document]

### [Patent Document]

[Patent Document 1] JP Laid-open Patent Publication No. 2006-322445
[Patent Document 2] JP Laid-open Patent Publication No. H9-159340

### SUMMARY OF THE INVENTION

In contrast, in a case where a shop is continuously placed at a same site for a relatively long period of time, it is not necessary to include a vehicle for transport, and it is desirable to set up the shop separately from a vehicle in view of the cost for such a vehicle and the effect on business. In such a case, however, a vehicular storage battery cannot be used, and thus it becomes difficult to secure power supply in unelectrified areas and/or disaster areas where mobile shops are particularly needed. It is conceivable that a power generator which uses fossil fuel is instead installed in such a shop; in this case, fuel supply is necessary.

In order to solve the above problem, an object of the present invention is to provide a mobile shop having high transportability and capable of being used even in an area where it is difficult to secure power supply.

The present invention provides a mobile shop including:
a transportable shop body including a top wall, a bottom wall, and a surrounding wall; and
at least one power generation device attached to the shop body, the at least one power generation device being one or more of a wind power generation device, a solar power generation device, and a hydraulic power generation device.

The term "transportable" as used herein means that the top wall, the bottom wall, and the surrounding wall of the shop body are not fixed to the ground, other installation, or the like.

Preferably, the mobile shop includes all of the wind power generation device, the solar power generation device, and the hydraulic power generation device. Preferably, the mobile shop further includes an electric apparatus configured to be powered by the at least one power generation device to operate.

According to this constitution, the shop body is capable of being transported, so that the shop has high transportability. Further, since the shop includes a natural energy power generation device such as a wind power generation device, a solar power generation device, and/or a hydraulic power generation device, it is possible to use an electric apparatus which is electrically powered even in areas where it is difficult to secure power supply such as unelectrified areas and disaster areas, so that the shop can be more easily operated. In particular, where the shop includes all of the wind power generation device, the solar power generation device, and the hydraulic power generation device, the power generation amount is less likely to be limited by natural environment such as weather conditions and topographical features, and/or time of the day or night, so that the shop can be set up and be operated with a greater applicability to a wide range of areas.

In one embodiment of the present invention, the shop body may be a freight container. According to this constitution, since the shop is constituted by a container which is suitable for transport, the shop can be transported by different transportation equipments such as automobiles, railroad cars, ships, and airplanes. Since the freight container has excellent robustness, it is possible to prevent damage due to vibration and/or impact during transport. Because of the robustness, the freight container also has excellent crime prevention performance against intrusion from the outside. Therefore, it is possible to reduce the cost for operating the shop.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a perspective view illustrating an exemplary schematic configuration of a mobile shop according to an embodiment of the present invention;
Fig. 2 is a front view of the mobile shop of Fig. 1; and
Fig. 3 is a perspective view illustrating an exemplary manner of using the mobile shop of Fig. 1.

### DESCRIPTION OF THE EMBODIMENTS

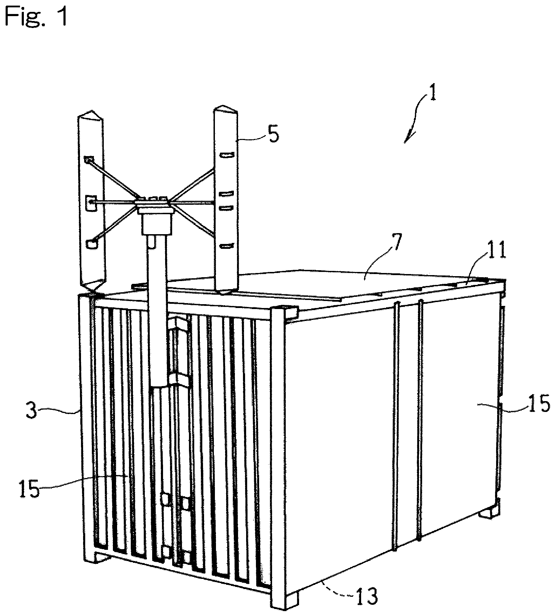

An embodiment of the present invention will be described with reference to the drawings. Fig. 1 shows a mobile shop 1 according to an embodiment of the present invention. The mobile shop 1 includes a shop body 3, a wind power generation device 5, and a solar power generation device 7.

The shop body 3 includes a substantially rectangular top wall 11, a substantially rectangular bottom wall 13, and four surrounding walls 15 disposed between the top wall 11 and the bottom wall 13 and has a substantially cube shape as a whole. More specifically, in the present embodiment, a freight container is used as the shop body 3. The "freight container" as used herein may preferably be a container having a standard dimension for freight transport, for example, a container having a dimension meeting a domestic standard for container transport. The container having a "standard dimension" as used herein may be, for example, a container having a dimension meeting a standard established by a domestic administrative body or international authorities such as the International Organization for Standardization (ISO), or a JR container which has been established as a de facto standard for rail freight containers in Japan.

Since the shop body 3 is constituted by a freight container, the shop body 3 can be transported by different transportation equipments such as automobiles, railroad cars, ships, and airplanes. Since the freight container has excellent robustness, it is possible to prevent damage to the shop body 3 due to vibration and/or impact during transport. Because of the robustness, the freight container also has excellent crime prevention performance against intrusion from the outside. Therefore, it is possible to reduce the cost for operating the mobile shop 1.

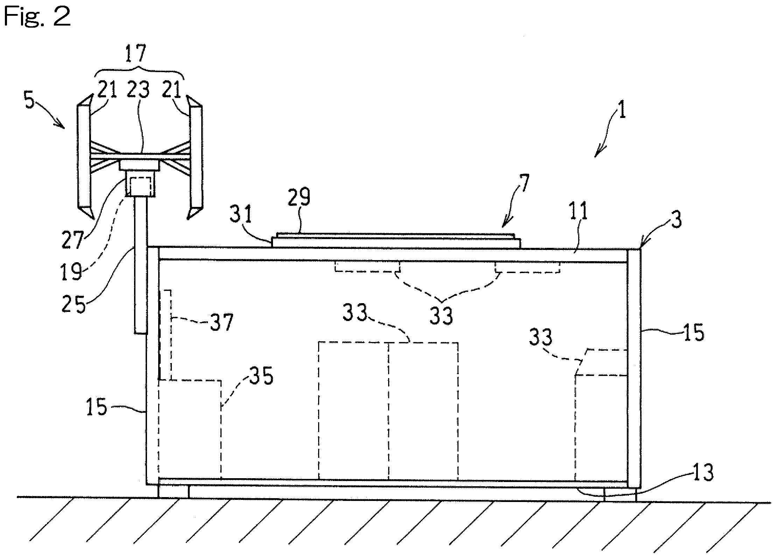

As shown in Fig. 2, the wind power generation device 5 of the present embodiment includes a wind turbine 17 and a power generator 19 which is driven by the wind turbine 17 to generate electric power. The wind turbine 17 is constructed as a vertical-axis wind turbine. Specifically, the wind turbine 17 includes a plurality of (two in this example) blades 21 and a blade support body 23 for supporting the blades 21. The respective blades 21 extend in a vertical direction, and the blade support body 23 is supported at an upper end of a support column 25 through a non-illustrated bearing so as to be rotatable about a vertical axis. The two blades 21 are disposed at positions having a phase shift of 180° around the axis of the support column 25. In this example, the support column 25 is fixed to an upper center part of one surrounding wall of the surrounding walls 15 of the shop body 3.

The power generator 19 of the wind power generation device 5 is disposed inside a power generator casing 27 attached to an upper portion of the support column 25. A stationary ring of the bearing is attached to the power generator casing 27, and a rotary ring of the bearing is coupled to the blade support body 23. As the wind turbine 17 rotates, a rotor of the power generator 19 rotates along with the rotary ring inside the power generator casing 27, so that the power generator 19 generates electric power. The power generator 19 may be, for example, an induction power generator or a synchronous power generator.

Since the vertical-axis wind turbine 17 can receive wind to generate electric power, albeit its relatively compact configuration, it is suitable as a wind turbine for the wind power generation device 5 provided to the mobile shop 1. It should be noted that the wind turbine 17 may be a horizontal-axis wind turbine.

The solar power generation device 7 of the present embodiment includes a solar panel 29 which receives sunlight to perform photoelectric conversion and a panel mount 31 for attaching the solar panel 29 to the shop body 3. In this example, the solar panel 29 is attached to an upper side of the top wall 11 of the shop body 3 through the panel mount 31. The solar panel 29 may be disposed on a surrounding wall 15 of the shop body 3 depending on the direction of solar radiation and/or installation environment or may be deployed around the shop body 3. It should be noted that although the panel mount 31 of the illustrated example has a simple plate-like configuration, the panel mount 31 may include a mechanism capable of inclining the solar panel 29 in accordance with the direction of the sun.

The mobile shop 1 further includes an electric apparatus 33 which is powered by the wind power generation device 5 and the solar power generation device 7 to operate. In the present embodiment, the shop body 3 includes a lighting apparatus for illuminating the interior of the shop body 3, a refrigerator, and a cash register as the electric apparatuses 33.

In the present embodiment, the shop body 3 also includes a storage battery 35 and a control device 37 thereinside. The storage battery 35 stores electric power generated by the wind power generation device 5 and the solar power generation device 7 and supplies the stored electric power to the electric apparatus(es) 33 as needed. The control device 37 controls an input of the electric power generated by the power generation devices to the storage battery 35 and an output of the electric power from the storage battery 35 to the electric apparatus(es) 33. For example, the control device 37 includes an AC/DC converter for converting alternating current (AC) electric power generated by the power generation devices into electric power having a voltage which can be stored in the storage battery 35 as well as an inverter for converting the electric power stored in the storage battery 35 into sine wave AC electric power similar to commercial AC power or into square wave AC electric power.

Although the present embodiment is described with reference to an example in which the mobile shop 1 includes the wind power generation device 5 and the solar power generation device 7, the mobile shop 1 may include a hydraulic power generation device (not illustrated), in addition to these power generation devices. The hydraulic power generation device includes a water wheel which is placed in water of a water channel and is rotated by flow of the water and a power generator which is driven by rotation of the water wheel. Where the mobile shop 1 includes such a hydraulic power generation device, for example, with the shop body 3 placed by the side of the water channel, the hydraulic power generation device is supported by a surrounding wall 15 of the shop body 3 which is located on the side of the water channel.

It is sufficient that the mobile shop 1 includes at least one power generation device among the wind power generation device 5, the solar power generation device 7, and the hydraulic power generation device. However, where the mobile shop 1 includes all of the wind power generation device 5, the solar power generation device 7, and the hydraulic power generation device, the power generation amount is less likely to be limited by natural environment such as weather conditions and topographical features, and/or time of the day or night, so that the shop can be set up and be operated with a greater applicability to a wide range of areas.

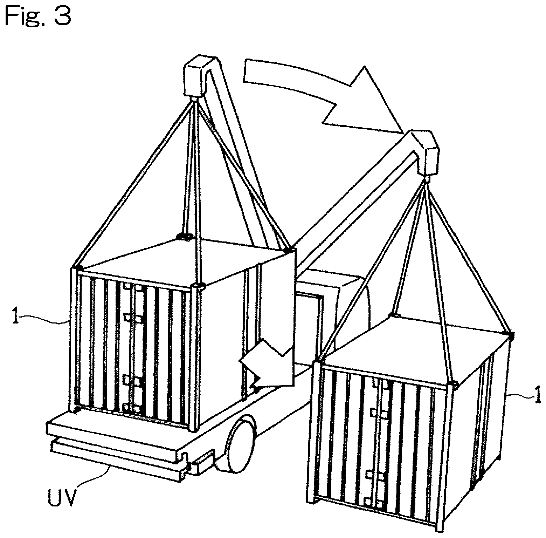

The mobile shop 1 according to the present embodiment can be easily transported by logistics or transportation equipments such as automobiles, railroad cars, ships, and airplanes. Where the mobile shop is transported by transportation equipments other than automobiles (i.e. railroad cars, ships, airplanes, or the like), the mobile shop 1 may be transported to a railroad station, a port, or an airport located near an installation site of the shop, and then be transported by an automobile to the installation site of the shop. In a case where the mobile shop 1 is transported by an automobile, for example, the automobile is a unic vehicle UV (crane truck) as shown in Fig. 3. After the mobile shop 1 is transported by a unic vehicle UV to an installation site, the mobile shop 1 is unloaded from the vehicle by a crane of the unic vehicle UV. The operation of unloading the mobile shop I from various transportation equipments may be carried out by using a forklift or a gantry crane.

The mobile shop 1 having the above construction can be used as, for example, a shop for selling food and/or convenience goods in a depopulated area. Further, the mobile shop 1 can be used as a shop for other applications than selling goods. Examples of such applications will be described below. However, the application of the mobile shop 1 according to the present embodiment is not limited to these examples.

When a natural disaster (such as earthquake and flood) occurs, the mobile shop 1 may be transported to an affected area to provide relief material such as food and convenience goods. In such a case, electricity generated by a power generation device such as the wind power generation device 5 of the mobile shop 1 may be used to supply power to a lighting in that area, to charge a mobile device, or to power a disaster relief device such as a water purification device.

The mobile shop 1 including equipment such as an automated teller machine (ATM) and a coin locker may be transported to an outdoor event site, and the mobile shop 1 may be placed during an event period. In such a case, electricity generated by a power generation device such as the wind power generation device 5 of in the mobile shop 1 may be used to supply power to a system of the ATM or the coin locker.

The mobile shop 1 may include a book shelf, so that the mobile shop 1 can be used as a mobile library. In such a case, electricity generated by a power generation device such as the wind power generation device 5 of the mobile shop 1 may be used to power an indoor lighting device or a loaning system.

The mobile shop 1 may include a medical device, so that the mobile shop 1 can be used as a mobile clinic. In such a case, electricity generated by a power generation device such as the wind power generation device 5 of the mobile shop 1 may be used to power an indoor lighting device or the medical device.

The mobile shop 1 may include a desk, a chair, a personal computer, a projector, a monitor, or the like, so that the mobile shop 1 can be used as a meeting room or a study room. In such a case, electricity generated by a power generation device such as the wind power generation device 5 of the mobile shop 1 may be used to power an indoor lighting device or various office equipment.

As described above, the mobile shop 1 according to the present embodiment has high transportability because the shop body 3 is capable of being transported. Further, since the shop includes a natural energy power generation device such as the wind power generation device 5, the solar power generation device 7, and/or the hydraulic power generation device, it is possible to use an electric apparatus which is electrically powered even in areas where it is difficult to secure power supply such as unelectrified areas and disaster areas, so that the shop can be more easily operated.

Although the present invention has been described in connection with the embodiments thereof, the embodiments disclosed herein are merely examples in all respects, and are not to be taken as limiting the scope of the present invention in any way whatsoever. The scope of the present invention is to be determined by the appended claims, not by the above description, and is intended to include any change made within the scope of claims or equivalent thereto.

### [Reference Numerals]

- 1: mobile shop
- 3: shop body
- 5: wind power generation device
- 7: solar power generation device
- 11: top wall
- 13: bottom wall
- 15: surrounding wall
- 33: electric apparatus

## Claims

1. A mobile shop comprising:
a transportable shop body including a top wall, a bottom wall, and a surrounding wall; and
at least one power generation device attached to the shop body, the at least one power generation device being one or more of a wind power generation device, a solar power generation device, and a hydraulic power generation device.

2. The mobile shop as claimed in claim 1, comprising the wind power generation device, the solar power generation device, and the hydraulic power generation device.

3. The mobile shop as claimed in claim 1 or 2, comprising an electric apparatus configured to be powered by the at least one power generation device to operate.

4. The mobile shop as claimed in any one of claims 1 to 3, wherein the shop body is a freight container.
